# EUROPÄISCHE PATENTSCHRIFT

(11) **EP 1 918 083 B1**
(45) Veröffentlichungstag und Bekanntmachung des Hinweises auf die Patenterteilung: **12.01.2011**
(21) Anmeldenummer: 06123408.4
(22) Anmeldetag: 02.11.2006
(51) Int. Cl.: B29C 44/32, B32B 3/04, E04C 2/292

(54) **Herstellung von Sandwichplattenelementen mit einer Doppelbandanlage**
Manufacture of sandwich panels between moving bands
Fabrication de panneaux sandwich entre deux bandes sans fin

(43) Veröffentlichungstag der Anmeldung: 07.05.2008
(73) Patentinhaber: Siempelkamp Handling Systeme GmbH, 82515 Wolfratshausen (DE)
(72) Erfinder:
(74) Vertreter: Szynka, Dirk

(56) Entgegenhaltungen:
- EP-A- 1 371 483
- EP-A- 1 518 654
- EP-A1- 0 361 727
- US-A- 4 024 309

## Beschreibung

Die vorliegende Erfindung betrifft die Herstellung von Sandwichplattenelementen, die zwei Deckschichten und eine dazwischenliegende Füllung aufweisen. Zumindest eine der Deckschichten soll aus Blech bestehen.

Sandwichplattenelemente dieses Typs sind längst bekannt und werden beispielsweise als vorgefertigte Bauplatten für Fassadenverkleidungen oder Ähnliches eingesetzt. Die Füllung besteht i. d. R. aus leichten und isolierenden Materialien, etwa Mineralwolle, Schäumen und dgl. Die Erfindung richtet sich allerdings auch auf Sandwichplattenelemente für andere Anwendungsgebiete.

Bei manchen Anwendungen, insbesondere bei Fassadenelementen, wird gewünscht, dass die Blechdeckschicht an den Rändern der Plattenfrontfläche umgebogen ist und eine ästhetisch ansprechende und/oder dichte Kante bildet. Solche Sandwichplattenelemente werden konventioneller Weise in getaktet arbeitenden Pressen hergestellt, in denen in einzelne Blechdeckschichteinheiten das Füllungsmaterial eingebracht und die weitere Deckschicht aufgebracht werden und das Paket zusammengepresst wird, um das Füllungsmaterial mit den Deckschichten zu verbinden.

EP-A-361727 offenbart ein solches Sandwichplattenelement und ein Verfahren für dessen Herstellung.

EP-A-1518654 beschreibt eine Anlage zur Rontinvierlichen Herstellung von Sandwichplatten.

Der Erfindung liegt das Problem zugrunde, ein verbessertes Verfahren zur Herstellung solcher Sandwichplattenelemente und eine dazu ausgelegte Anlage anzugeben.

Das Problem wird erfindungsgemäß gelöst durch ein Verfahren zum Herstellen eines Sandwichplattenelements mit einer Blechdeckschicht, einer Füllung und einer weiteren Deckschicht, welches Verfahren die Schritte aufweist:
- Einbringen der Blechdeckschicht in Form eines kontinuierlichen Blechstrangs und der weiteren Deckschicht sowie des Füllungsmaterials dazwischen in einer Doppelbandanlage,
- Aushärten in der Doppelbandanlage,
- Trennschnitte zwischen den Sandwichplattenelementen durch die weitere Deckschicht und zumindest einen Teil der Füllung nach dem Aushärten in der Doppelbandanlage, wobei die Blechdeckschicht über zumindest einen Trennschnitt übersteht,

- Entfernen zumindest eines Teils des Füllungsmaterials zwischen den Trennschnitten
- und Umbiegen eines überstehenden Blechstreifens der Blechdeckschicht zur Herstellung einer zumindest einen Teil einer Stirnfläche des Sandwichplattenelements abdeckenden Abschlussblechkante,
sowie durch eine für dieses Verfahren ausgelegte Anlage.

Bevorzugte Ausgestaltungen sind in den abhängigen Ansprüchen angegeben und werden im Folgenden näher erläutert. Die einzelnen Merkmale haben grundsätzlich sowohl für die Verfahrenskategorie als auch die Vorrichtungskategorie Bedeutung, ohne dass hierzwischen noch explizit unterschieden wird.

Die Grundidee der Erfindung besteht darin, die eingangs geschilderten Sandwichplattenelemente mit seitlich umgebogenen Kanten einer Blechdeckschicht in einem kontinuierlichen Prozess statt in einem getakteten diskontinuierlichen Verfahren herzustellen.

Dazu soll ein kontinuierlicher Blechstrang zur Herstellung der Blechdeckschichten eingesetzt werden und zusammen mit der anderen Deckschicht und dem Material für die Füllung in einer Doppelbandanlage verarbeitet werden. Die Doppelbandanlagen sind an sich bekannt. Sie bestehen im Wesentlichen aus zwei einander entgegengesetzten Bandtrumen mit i. d. R. horizontaler Laufrichtung, die zwischen sich und i. d. R. auch unter Zuhilfenahme weitere seitlicher schmaler Begrenzungsbandtrume einen Raum begrenzen. Damit sollen Mehrschichtplattenelemente in Folge der Raumbegrenzung unter Druck und i. d. R. auch mit zusätzlicher Wärmeeinwirkung infolge einer Heizung der Bänder einem Aushärtevorgang unterzogen werden. Häufig handelt es sich dabei um das Aushärten von Schaumfüllungen. Es kann aber auch um das Aushärten eines Klebstoffs gehen, der bestimmte Schichten miteinander verbindet, etwa eine Mineralfaserfüllung oder eine Wabenstrukturfüllung mit den Deckschichten oder Randbereiche der Deckschichten miteinander.

Der kontinuierliche Blechstrang kann dabei die obere oder die untere Deckschicht bilden. Die jeweils andere Deckschicht besteht vorzugsweise ebenfalls aus Blech und wird vorzugsweise ebenfalls aus einem kontinuierlichen Blechstrang gefertigt. Sie könnte aber beispielsweise auch aus einem anderen Material, etwa einer Folie, einem Papier oder Laminat, einer Holzplatte oder anderem bestehen.

An dem aus der Doppelbandanlage auslaufenden Strang werden Trennschnitte vorgenommen, um die einzelnen Sandwichplattenelemente voneinander zu trennen. Dies kann vorzugsweise mit einer Kreissäge geschehen, insbesondere eine Diagonalkreissäge, die das Anbringen gerader Querschnitte bei einer Relativbewegung zwischen dem Strang und dem Sägegestell erlaubt. Bei den Trennschnitten soll erfindungsgemäß ein Blechstreifen der Blechdeckschicht bzw. zumindest einer der Blechdeckschichten stehen bleiben, die Trennung also so erfolgen, dass die andere Deckschicht und zumindest ein Teil der Füllung in einem gewissen Abstand in Transportrichtung von dem Schnitt durch die Blechdeckschicht, also den Blechstrang, getrennt werden. Der damit stehen gebliebene Blechstreifen wird nachfolgend umgebogen, um das gewünschte Sandwichplattenelement mit umgebogener Blechkante zu erzeugen.

Vorzugsweise gilt dies bei der Trennung zwischen zwei benachbarten Sandwichplattenelementen beidseits, so dass also umgebogene Blechkanten an den beiden senkrecht zur Transportrichtung verlaufenden Begrenzungen des Plattenelements entstehen. (Hier wird der Einfachheit halber von rechteckigen Plattenelementen ausgegangen. Die Ausführungen gelten natürlich sinngemäß auch für abweichende Geometrien.)

Dabei können beispielsweise mit zwei Trennschnitten jeweils eine von gegenüberliegenden Blechdeckschichten und der größte Teil der Füllung durchtrennt werden, um dann die Plattenelemente trennen und den dem Blechstreifen entsprechenden Füllungsstreifen entfernen zu können. Die dann auf (im zusammenhängenden Zustand) entgegengesetzten Seiten bestehenden Blechstreifenüberstände an den Plattenelementen können nun umgebogen werden.

Vorzugsweise weisen die Sandwichplattenelemente im fertigen Zustand Profilkanten auf, die bei der Montage, etwa einer Fassade, einen für Kräfte senkrecht zu der Plattenebene wirksamen Formschluss zwischen benachbarten Plattenelementen herstellen. Man kann hier von einem Nut-und-Feder-Prinzip sprechen, wenngleich diese Profilkanten nicht notwendigerweise einer konventionellen Nut und Feder Anordnung entsprechen müssen. Vorzugsweise werden hierfür die bei der Herstellung einer Doppelbandanlage in Längsrichtung, also Transportrichtung, liegenden Kanten verwendet und diese bereits vor dem Einführen in die Doppelbandanlage entsprechend umgebogen. Es können an sich bekannte Profilierungseinrichtungen mit Rollen vierwendet werden, die ähnlich einer Walzstraße die Randbereiche des Blechstrangs profilartig aufbiegen.

Wenn die Sandwichplattenelemente nicht oben-unten-symmetrisch sind und an entgegengesetzten Kanten (in Transportrichtung vorne und hinten) umgebogene Blechkanten zur selben Seite (etwa nach oben) aufweisen sollen, können auch drei Trennschnitte verwendet werden, was im Rahmen dieser Erfindung bevorzugt ist. Ein mittlerer Trennschnitt trennt zumindest die entsprechende Deckschicht, etwa die untere, und damit letztlich die beiden Sandwichplattenelemente vollständig, während zwei demgegenüber zu entgegengesetzten Seiten beabstandete Trennschnitte beispielsweise nur die obere Deckschicht durchtrennen und die untere Blechdeckschicht stehen lassen. Dann entstehen die überstehenden Blechstreifen auf derselben Seite und können nach Wunsch umgebogen werden.

Vorzugsweise werden auch die in Transportrichtung liegenden Kanten umgebogen. Dies gilt insbesondere für die in der Doppelbandanlage unten liegende Deckschicht, kann aber auch alternativ oder vorzugsweise zusätzlich für die obere Deckschicht gelten. Das Biegen am kontinuierlichen Blechstrang erfolgt dabei vorzugsweise vor dem Einbringen der Füllung, um mit den umgebogenen Kanten bereits eine seitliche Begrenzung für die Füllung zur Verfügung zu stellen, was insbesondere bei flüssig eingebrachten Füllungsmaterialien von Vorteil ist.

Um das Entfernen eines Füllungsmaterialstreifens zwischen den späteren vereinzelten Sandwichplattenelementen zu erleichtern, kann auf eine der oder beide Deckschichten vor dem Einbringen der Füllung ein Trennmaterial aufgebracht werden. Beispielsweise könnten die Deckschichtmaterialien in den entsprechenden Streifenabschnitten mit einem haftvermindernden Mittel bestrichen oder besprüht werden. Besonders bevorzugt ist aber das Einbringen, etwa Einlegen oder Aufkleben, von Folienstreifen oder Papierstreifen. Diese verhindern ein Anhaften der Füllung infolge der Materialeigenschaften der Füllung oder eines auf die Deckschichten kontinuierlich aufgebrachten Klebstoffs zuverlässig und erlauben damit ein einfaches und, wie i. d. R. gewünscht, auch vollständiges Entfernen der Füllungsstreifen im Bereich der umzubiegenden Blechstreifenüberstände.

Eine weitere mögliche Maßnahme im Zusammenhang mit der Trennung der Sandwichplattenelemente betrifft das Entfernen, vorzugsweise Ausstanzen, eines Blechstücks in dem oder den kontinuierlichen Blechsträngen bereits vor dem Einbringen in die Doppelbandanlage und vor dem Biegen der Längskanten des Blechstrangs. Dieses Blechstück liegt in dem Bereich der späteren Blechstreifenüberstände, und zwar am Rand in dem Übergang zu dem seitlichen Kantenbereich und insbesondere Profilkantenbereich. Der entfernte Bereich soll an die bei den Trennschnitten angebrachten Schnittflächen anschließen und dabei das Heraustrennen der umgebogenen Längskantenabschnitte zwischen den Trennschnitten erleichtern. Insbesondere kann damit auch die für eine Deckschicht und die oder den größten Teil der Füllung durchtrennenden Trennschnitte erforderliche Genauigkeit gemindert werden. Wenn ein solcher Trennschnitt die Füllung nicht präzise ganz durchtrennt, ist dies i. d. R. solange nicht von wesentlichem Nachteil, wie zumindest die seitlichen Blechkantenstücke ganz entfernt werden können. Wenn diese durch eine vorherige Stanzung bereits einen Anschluss an einen nicht ganz bis auf die stehen bleibende Deckschicht durchgehenden Schnitt herstellen, kann mit geringerer Toleranz und ohne Gefahr einer versehentlichen Beschädigung der stehen bleibenden Deckschicht gearbeitet werden. Insbesondere kommt hierbei eine U-Form oder U-ähnliche Form in Betracht, deren Basis gerade im ersten Biegeübergang von der stehen bleibenden Deckschicht zu der längsseitigen Aufbiegung liegt oder mit Rücksicht auf die seitliche Kantenprofilform zur Anpassung nach dem späteren Umbiegen in den umzubiegenden Blechstreifen hineinragt. Die Schenkel ragen in den Kantenbereich. Zur Veranschaulichung wird auf das Ausführungsbeispiel verwiesen.

Das erfindungsgemäße nach der Trennung der einzelnen Plattenelemente vorgesehene Umbiegen der Blechstreifenüberstände, also der Kanten quer zur Längsrichtung, kann in folgender Weise mit einem besonders definierten Biegeverhalten und, wenn gewünscht, kontrolliert kleinen Biegeradien durchgeführt werden: Einerseits wird das Umbiegen mit einem Werkzeug vorgenommen, das eine formdefinierende Fläche zur Anlage an den Blechstreifenüberstand bietet, etwa eine gerade Fläche. Andererseits wird die freie Kante des Blechstreifenüberstandes radial begrenzt. Letzteres bedeutet, dass die freie Kante, wenn man sich den Biegevorgang vereinfacht (oder auch zutreffender Weise) als Kreisbewegung vorstellt, auf einen bestimmten Radius festgelegt wird, etwa durch einen Anschlag an einen Winkelabsatz in der formdefinierenden Anlagefläche. Damit kann der Blechstreifen sich gegenüber der Anlagefläche nicht mehr nach außen auswölben und andererseits auch nicht mehr radial "ausbrechen" und biegt sich insoweit formdefiniert und mit einem kleinen Krümmungsradius und lokalisierter Biegung im Fußpunkt um.

Die Deckschichten sind vorzugsweise beidseitig Blechdeckschichten. Eine seitliche Profilierung beider Deckschichten verbessert die Stabilität und entfernt die Anschlussnähte zwischen den beiden Deckschichten bzw. den Übergang zwischen beiden, wenn sie nicht aneinanderstoßen sollten, aus den beiden entgegengesetzten Frontflächen des Plattenelements in den nach der Montage i. d. R. nicht mehr sichtbaren seitlichen Kantenbereich.

Die Füllung ist bei einer bevorzugten Ausführungsform ein Schaummaterial aus der PUR/PIR-Materialklasse. Dazu werden vorzugsweise schon vor dem Einführen in die Doppelbandanlage und vorzugsweise in die noch nicht abgedeckte untere Deckschicht die beiden entsprechenden Komponenten vermischt und in flüssiger Form eingebracht. Sie können dann zwischen den beiden Deckschichten aufschäumen und werden in der Doppelbandanlage durch die räumliche Begrenzung zum Ausfüllen des gesamten Zwischenvolumens zwischen den Deckschichten gezwungen und unter Druck gesetzt. Bevorzugt sind ferner ein Mineralfasermaterial oder ein Wabenstrukturmaterial, die fest aufgelegt werden können.

Im Folgenden wird die Erfindung anhand eines Ausführungsbeispiels näher verdeutlicht, wobei die einzelnen Merkmale auch in anderen Kombinationen erfindungswesentlich sein können und sich sowohl auf die Vorrichtungskategorie als auch auf die Verfahrenskategorie beziehen.
- Figur 1: zeigt ein erfindungsgemäß hergestelltes Sandwichplattenelement in per- spektivischer Ansicht.
- Figur 2: zeigt eine Seitenansicht des Sandwichplattenelements aus Figur 1.
- Figur 3: zeigt von oben nach unten in zeitlicher Abfolge Stanz-, Einlege- und Bie- geschritte zu dem erfindungsgemäßen Verfahren.
- Figur 4: zeigt die Verfahrensschritte aus Figur 3 von links nach rechts an einem kontinuierlichen Blechstrang.
- Figur 5: zeigt in zeitlicher Abfolge zeilenweise Trenn- und Biegeschritte des erfin- dungsgemäßen Verfahrens an den Grenzen zwischen den Sandwichplat- tenelementen.
- Figur 6: zeigt wiederum in zeitlicher Abfolge zeilenweise eine Variante zu Figur 5.

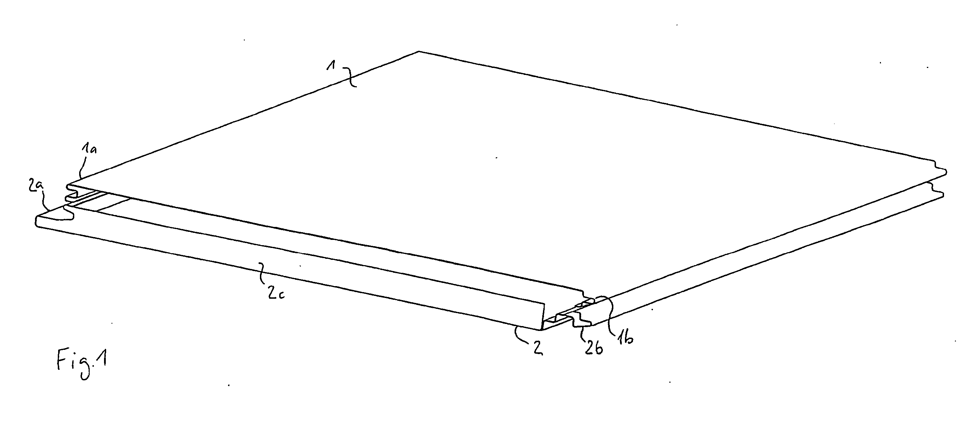

Figur 1 zeigt ein Sandwichplattenelement perspektivisch. Von oben erkennbar ist eine obere Deckschicht 1, nur am Rande erkennbar ist ferner eine untere Deckschicht 2. Bei beiden handelt es sich um Aluminiumblechplatten mit rechteckigen Grundmaßen in der Plattenebene und profilierten umgebogenen Rändern 1a und 1b der oberen Deckschicht und 2a und 2b der unteren Deckschicht. Im vorderen Bereich ist eine ebenfalls umgebogene, aber nicht profilierte Kante 2c der unteren Deckschicht zu sehen, die etwas mehr als die Hälfte der Höhe des Sandwichplattenelements ausmacht. Zur Verbesserung der Darstellung ist die dahinter und zwischen den beiden Deckschichten 1 und 2 befindliche Füllung aus einem PU-Schaum nicht dargestellt.

Es handelt sich um ein Fassadenbauelement, das, wie die Figur zeigt, mit gleichartigen Fassadenbauelementen an den Profilkanten ineinander gesteckt werden kann und dabei einen nut-und-feder-artigen Formschluss herstellt. Insbesondere greift dabei der Vorsprung der Profilkante 1b in die gabelartige Aufnahme der Profilkante 1a und der Vorsprung der Profilkante 2b in die Aufnahme der Profilkante 2a. Die in Figur 1 untere Seite ist die Sichtseite, weswegen der Randstreifen 2c nach oben umgebogen ist, was übrigens auch für den verdeckten entgegengesetzten Randstreifen hinten rechts an dem in Figur 1 dargestellten Element gilt. Dadurch weist die Deckschicht 2 zur Sichtseite hin sauber definierte gebogene Metallkanten auf. Gelegentlich werden solche Bauteile als "Curtain Wall Element" bezeichnet.

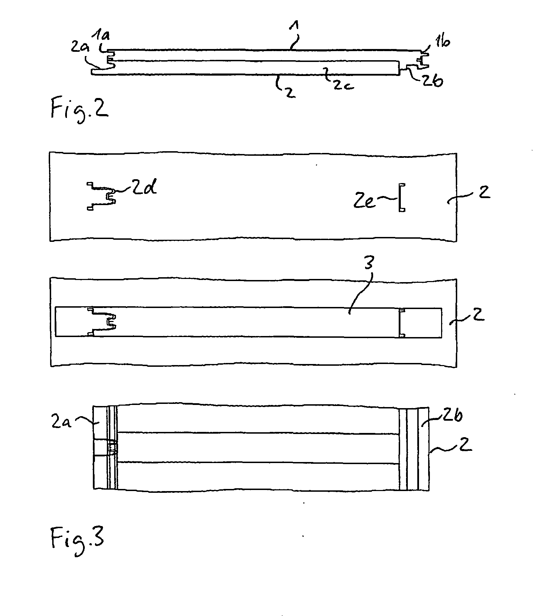

Figur 2 zeigt eine Frontansicht der in Figur 1 links vorne sichtbaren Kante. Diese ist in einer vertikalen Flucht zu den und zur Veranschaulichung der drei Einzeldarstellungen in Figur 3 zu sehen. Hierbei handelt es sich um drei zeitlich aufeinander folgende Verfahrensschritte, wobei jeweils im Wesentlichen der in der Grenze zwischen zwei Sandwichplattenelementen liegende Streifen des zu der unteren Deckschicht 2 führenden und im Verfahren untenliegenden kontinuierlichen Blechstrangs dargestellt ist. Der Blechstrang ist hier ebenfalls mit 2 bezeichnet.

Die oberste Einzeldarstellung in Figur 3 zeigt rechts und links zwei eingestanzte Ausnehmungen in dem Blechstrang 2, die mit 2d und 2e bezeichnet sind. Diese Ausstanzungen 2d und 2e werden mit üblichen Stanzwerkzeugen an dem noch geraden und unverformten Blechstrang 2 vorgenommen. Auf die Form wird später genauer eingegangen.

Quer zur Strangrichtung und Transportrichtung wird daraufhin ein leicht selbstklebender Folienstreifen 3 aufgelegt, der die beiden Ausstanzungen 2d und 2d abdeckt und fast die ganze Breite des Blechstrangs erfasst.

Die unterste Einzeldarstellung zeigt, dass dem Blechstrang 2 mit an sich bekannten mit Rollen bewehrten Präge- und Biegewerkzeugen die Profilkanten 2a und 2b angeformt worden sind, die die Figuren 1 und 2 zeigen. Dabei ist die Ausstanzung 2d unter der Profilkante 2a dargestellt, wobei lediglich ihre in Figur 3 oben links nach links weisenden "Füße" in der äußersten linken vertikalen Kante der Profilkante 2a liegen und damit nicht mehr zu sehen sind. Rechts, in der Profilkante 2b, verschwindet die gesamte Ausstanzung 2e in der linken vertikalen Einzelkante der Profilkante 2b. Der Folienstreifen 3 erstreckt sich in die Profilkanten 2a und 2b hinein.

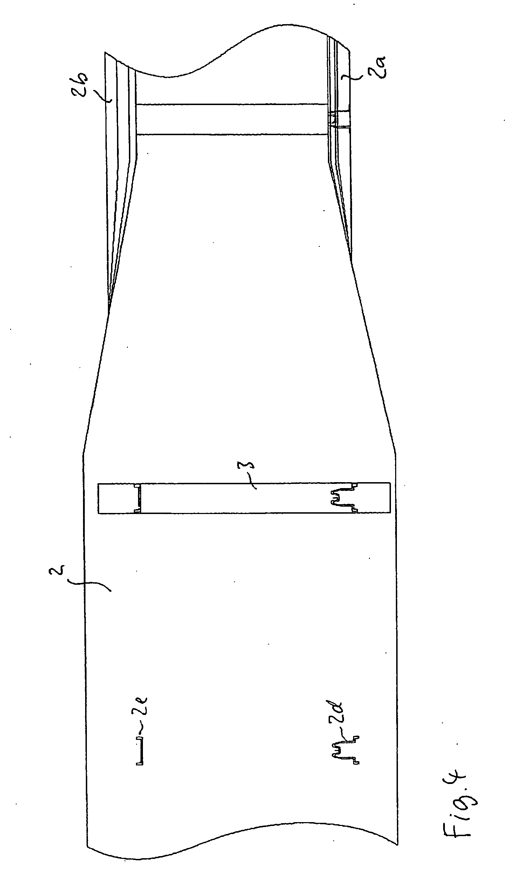

Figur 4 zeigt den Blechstrang 2 aus Figur 3 von links nach rechts durchlaufend, also gewissermaßen entlang einer erfindungsgemäßen Produktionsstraße. Im linken Bereich sind wie in der obersten Darstellung der Figur 3 die Ausstanzungen 2d und 2e vorgenommen, im mittleren Bereich ist bereits der Folienstreifen 3 aufgeklebt und im rechten Bereich erkennt man die profilgemäße Aufkantung der Seiten des Streifens 2. In der Realität wäre die horizontale Länge des Streifens zwischen den verschiedenen Prozessschritten natürlich größer, insbesondere im Bereich des Aufbiegens, und müsste man sich im Übrigen, an sich für den Fachmann geläufige einzelne Bearbeitungsstationen hinzudenken. Links anschließend, also sozusagen stromaufwärts, wird der Blechstrang 2 von einem sog. Coil abgewickelt; rechts, also stromabwärts, wird in die durch die Aufkantungen 2a und 2b gebildete Hohlform das Zweikomponentengemisch für die PU-Füllung eingefüllt und wird dann die ebenfalls mit Profilkanten 1a und 1b versehene obere Deckschicht 1 als kontinuierlicher Blechstrang aufgelegt. Dieses Paket wird dann in die Doppelbandanlage eingeführt, in der der PU-Schaum aufschäumt und ausreagiert.

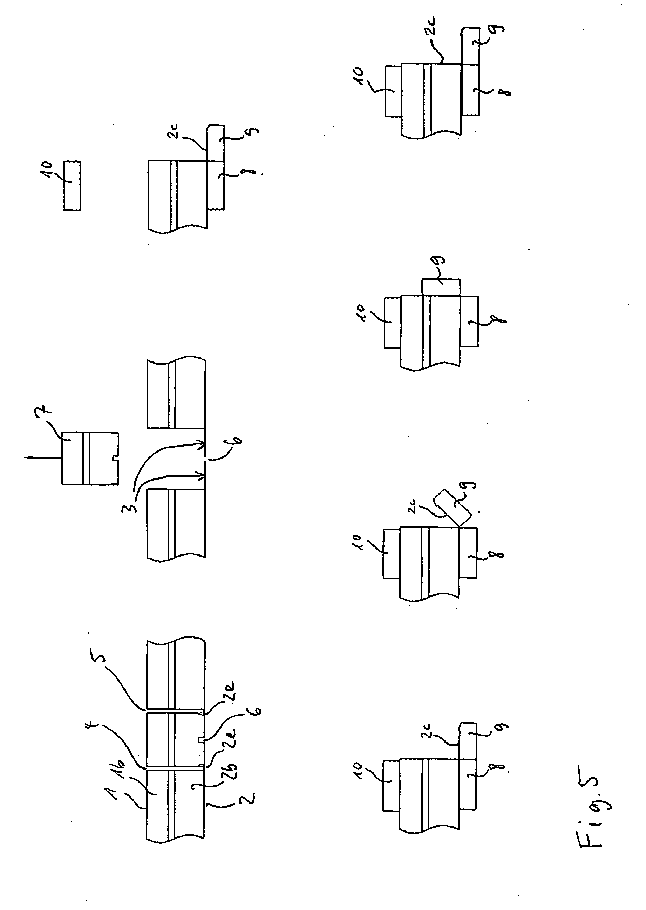

Figur 5 zeigt von links nach rechts und von oben nach unten zeilenweise in schematischen Darstellungen den weiteren Ablauf des Verfahrens stromabwärts von der Doppelbandanlage. Oben links erkennt man das Paket aus der oberen Deckschicht 1 und der unteren Deckschicht 2 mit den Profilseitenkanten 1b und 2b. Ferner erkennt man in der Mitte unten die U-Schenkel der Ausstanzung 2e. Diese sind z. T. aufgegangen in von oben kommend vorgenommenen Trennschnitten 4 und 5, die die obere Deckschicht 1, den größten Teil der Füllung und die Profilkanten 2a und 2b der unteren Deckschicht 2 durchtrennt haben und mit einer Doppeldiagonalkreissäge vorgenommen worden sind. Der in der Plattenebene liegende Teil der unteren Deckschicht 2 ist jedoch nicht durchtrennt. Diesen wiederum hat ein zwischen den beiden Trennschnitten 4 und 5 und von unten geführter dritter Trennschnitt 6 durchtrennt, der jedoch im Übrigen nicht besonders tief eingeschnitten hat. Auch hier wurde eine Diagonalkreissäge eingesetzt.

Die nächste Darstellung in der oberen Zeile in der Mitte zeigt, dass ein Block 7 zwischen den beiden Trennschnitten 4 und 5 entfernt wird. Hierbei kommt die Tatsache zu Hilfe, dass zwischen den beiden Trennschnitten 4 und 5 auf dem Teil der unteren Deckschicht 2 in der Plattenebene der Folienstreifen 3 aufgeklebt ist, der ein Anhaften der PU-Schaumfüllung an dem Blech verhindert. Damit sind die beiden dargestellten Sandwichplattenelemente vollständig getrennt.

Es folgt nun, beginnend mit der dritten Einzeldarstellung oben rechts, der beispielhaft für das linke Sandwichplattenelement dargestellte Biegevorgang des zwischen den Trennschnitten 4 und 6 stehen gebliebenen Blechstreifens der unteren Deckschicht 2, der bereits in Figur 1 mit 2c bezeichnet wurde.

Dazu wird von unten ein schematisch dargestelltes Biegewerkzeug mit einem linken Schenkel 8 und einem rechten Schenkel 9 an die untere Deckschicht 2 angelegt. Der rechte Schenkel weist rechts oben einen Winkelabsatz auf seiner Oberseite auf, der zu der horizontalen Länge des Blechstreifens 2c passt und von rechts an dessen freie Kante in Anlage gebracht wird. Der linke Schenkel 8 drückt von unten gegen die Deckschicht 2. Ferner wird von oben eine Niederhaltevorrichtung 10 abgesenkt, die gemäß den folgenden vier Einzeldarstellungen von oben auf die obere Deckschicht 1 drückt. In der zweiten Zeile zeigt die Abfolge der vier Einzeldarstellungen, dass der rechte untere Schenkel der Biegevorrichtung um 90° entgegen dem Uhrzeigersinn gekippt wird, wobei der erwähnte Winkelabsatz den Blechstreifen 2c radial am Ausbrechen hindert und die planare Anlage an dem Schenkel 9 die gerade Form des Streifens 2c erhält. Damit wird der Streifen 2c sauber um eine lokalisiert in dem Übergang zwischen den Schenkeln 8 und 9 liegende Biegekante nach oben gebogen und liegt dann, wie die letzte Darstellung rechts unten zeigt, plan an der Stirnfläche des Sandwichplattenelements und der Füllung an.

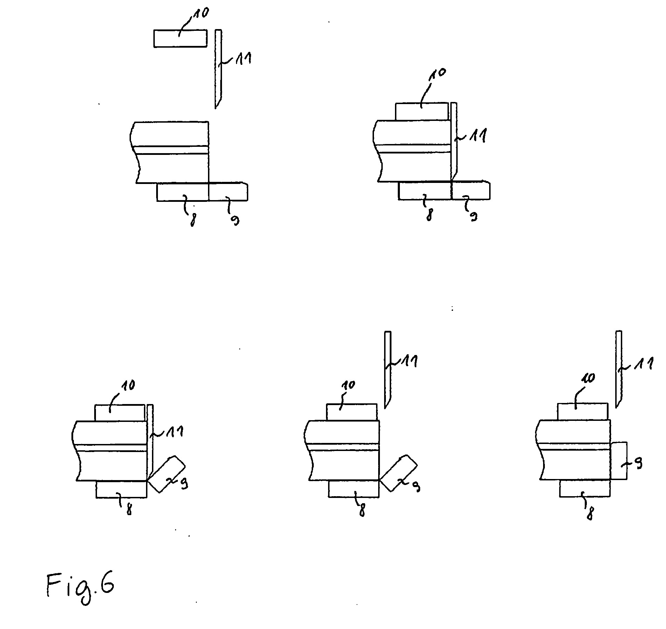

Eine Alternative hierzu zeigt Figur 6, und zwar auf dem Stand der rechten oberen Abbildung in Figur 5 beginnend, also die beiden Einzeldarstellungen links oben und in der Mitte oben in Figur 5 voraussetzend. Der Biegevorgang entspricht zunächst den Erläuterungen zu Figur 5, wobei hier jedoch zusätzlich eine Klinge 11 eingesetzt wird, die von oben auf die Biegekante herabdrückt und nach der Definition der Biegekante bei etwa 45° Biegewinkel wieder nach oben weggezogen wird. In dieser Weise kann der Biegevorgang weiter erleichtert und geometrisch noch besser kontrolliert werden.

Die entgegengesetzte Seite des Sandwichplattenelements wird bei und nach der Trennung von dem daran anschließenden Sandwichplattenelement analog behandelt, so dass letztlich die in Figur 1 dargestellte Geometrie entsteht.

In Figur 1 erkennt man, dass die besondere Form der Ausstanzung 2d mit der Tatsache zusammenhängt, dass die Profilkante 2a zurückspringt und damit der hochgebogene Blechstreifen 2c zu dem entsprechenden Profil passen muss. Die Ausstanzung 2d spiegelt diese Formanpassung wider und entspricht im Übrigen in der Funktion der Ausstanzung 2e.

Man erkennt leicht, dass die Höhe des Blechstreifens 2c in Figur 1 auch anders gewählt werden kann, etwa über die gesamte Plattenstärke durchgehend. Dann wäre der Block 7 in Figur 5 oben in der Mitte entsprechend breiter, d. h. die Trennschnitte 4 und 5 hätten einen größeren Abstand voneinander. Die Form der Ausstanzungen 2d und 2e wäre anzupassen.

Ferner könnte auch eine geringere Dicke gewählt werden, und zwar auch so niedrig, dass für die Ausstanzung 2d eine analoge U-Form wie für die Ausstanzung 2e verwendet werden könnte. Dementsprechend wäre dann der Block 7 schmaler und der Abstand der Trennschnitte 4 und 5 geringer.

Schließlich kann man sich auch vorstellen, dass bei symmetrischen Seitenprofilformen 1a, 1b, 2a, 2b hinsichtlich einer oben/unten-Vertauschung in Figur 5 links oben auch ein linker Trennschnitt von unten bis kurz vor die obere Deckschicht 1 und ein rechter Trennschnitt von oben bis kurz vor die untere Deckschicht 2 möglich wäre, woraufhin dann ein Streifen von oben nach unten und ein anderer an dem anderen Plattenelement von unten nach oben umgebogen würde.

Insgesamt bietet die Erfindung durch die Möglichkeit der kontinuierlichen Herstellung der dargestellten Curtain-Wall-Sandwichplattenelemente aus Blechsträngen und unter Verwendung einer Doppelbandanlage eine sehr ökonomische Verfahrensführung.

## Patentansprüche

1. Verfahren zum Herstellen eines Sandwichplattenelements mit einer Blechdeckschicht (2), einer Füllung und einer weiteren Deckschicht (1),
welches Verfahren die Schritte aufweist:
- Einbringen der Blechdeckschicht (2) in Form eines kontinuierlichen Blechstrangs (2) und der weiteren Deckschicht (1) sowie des Füllungsmaterials dazwischen in eine Doppelbandanlage,
- Aushärten in der Doppelbandanlage,
- Trennschnitte (4, 5, 6) zwischen den Sandwichplattenelementen durch die weitere Deckschicht (1) und zumindest einen Teil der Füllung nach dem Aushärten in der Doppelbandanlage, wobei die Blechdeckschicht (2) über zumindest einen Trennschnitt (4, 5) übersteht,
- Entfernen zumindest eines Teils des Füllungsmaterials zwischen den Trennschnitten (4, 5, 6)
- und Umbiegen eines überstehenden Blechstreifens (2c) der Blechdeckschicht (2) zur Herstellung einer zumindest einen Teil einer Stirnfläche des Sandwichplattenelements abdeckenden Abschlussblechkante (2c).

2. Verfahren nach Anspruch 1, bei dem der kontinuierliche Blechstrang (2) vor dem Einbringen in die Doppelbandanlage längsseitig so umgebogen wird, dass das Sandwichplattenelement für einen Formschluss bzgl. einer zur Plattenebene senkrechten Richtung ausgelegte Profilkanten (2a, 2b) aufweist.

3. Verfahren nach Anspruch 1 oder 2, bei dem auf den Blechstrang (2) vor dem Einbringen des Füllungsmaterials zwischen die späteren Sandwichplattenelemente ein Trennmaterial (3) aufgebracht wird, so dass sich die Füllung nach dem Aushärten dort von dem Blechstrang (2) lösen lässt.

4. Verfahren nach Anspruch 3, bei dem das Trennmaterial ein Papier- oder Folienstreifen (3) ist.

5. Verfahren nach einem der vorstehenden Ansprüche, bei dem in dem Blechstrang (2) zwischen den späteren Sandwichplattenelementen in dem Übergang zwischen der späteren Blechdeckschicht (2) in der Plattenebene und einem daran angrenzenden seitlichen Blechkantenbereich (2a, 2b) ein Blechstück (2d, 2e) so entfernt wird, dass sich die entsprechende Fläche später an eine Trennschnittfläche (4, 5) anschließt.

6. Verfahren nach Anspruch 5, bei dem das entfernte Blechstück (2d, 2e) eine U-ähnliche Form aufweist, deren Schenkel in den Blechkantenbereich (2a, 2b) hochragen und später einen Anschluss an den Trennschnitt (4, 5) bilden.

7. Verfahren nach einem der vorstehenden Ansprüche, bei dem bei dem Umbiegen des Blechdeckschichtstreifens (2c) nach dem Aushärten der Streifen (2c) in eine Anlage an eine formdefinierende Fläche (9) gebracht wird und die Streifenkante (2c) bei der Biegebewegung radial begrenzt wird, um ein formdefiniertes Biegeverhalten zu erreichen.

8. Verfahren nach einem der vorstehenden Ansprüche, bei dem auch die weitere Deckschicht (1) eine Blechdeckschicht (1) ist, aus einem kontinuierlichen Blechstrang (1) erzeugt wird und längsseitig vor dem Einbringen des Füllungsmaterials umgebogen (1a, 1b) wird.

9. Verfahren nach einem der vorstehenden Ansprüche, bei dem das Füllungsmaterial ein PUR/PIR-Schaummaterial, Mineralfasermaterial oder Wabenstrukturmaterial ist.

10. Anlage zur Herstellung von Sandwichplattenelementen mit einer Blechdeckschicht (2), einer Füllung und einer weiteren Deckschicht (1), mit:
- einer Doppelbandanlage, wobei die Anlage so ausgelegt ist, dass die Blechdeckschicht (2) in Form eines kontinuierlichen Blechstrangs (2) und die weitere Deckschicht (1) sowie das Füllungsmaterial dazwischen in die Doppelbandanlage eingebracht wird,
- einer Trennvorrichtung, die für Trennschnitte (4, 5, 6) zwischen den Sandwichplattenelementen durch die weitere Deckschicht (1) und zumindest einen Teil der Füllung in der Doppelbandanlage ausgelegt ist, wobei die Blechdeckschicht (2) über zumindest einen Trennschnitt (4, 5) übersteht,
- einer Vorrichtung zum Entfernen zumindest eines Teils des Füllungsmaterials zwischen den Trennschnitten (4, 5, 6)
- und einer Biegevorrichtung (8 - 11), die zum Umbiegen eines überstehenden Blechstreifens (2c) der Blechdeckschicht (2) zur Herstellung einer zumindest einen Teil einer Stirnfläche des Sandwichplattenelements abdeckenden Abschlussblechkante (2c) ausgelegt ist.

11. Anlage nach Anspruch 10, die für ein Verfahren nach einem der Ansprüche 2 - 9 ausgelegt ist.

## Claims

1. A method for fabricating a sandwich board element having a sheet metal cover layer (2), a filling and a further cover layer (1),
said method comprising the steps of:
- inserting said sheet metal cover layer (2) in the condition of a continuous sheet metal train (2) and said further cover layer (1) as well as the filling material inbetween into a double conveyor system,
- hardening in said double conveyor system,
- separating cuts (4, 5, 6) between said sandwich board elements through said further cover layer (1) and at least a part of said filling after said hardening in said double conveyor system, wherein said sheet metal cover layer (2) protrudes beyond at least one separating cut (4, 5),
- removing at least a part of said filling material between said separating cuts (4, 5, 6),
- and bending a protruding sheet metal strip (2c) of said sheet metal cover layer (2) for fabricating an end sheet metal edge (2c) covering at least a part of an end face of said sandwich board element.

2. The method according to claim 1 wherein said continuous sheet metal train (2) is bent along its long side before being placed into said double conveyor system in such a way that said sandwich board element comprises profile edges (2a, 2b) designed for a form closure with respect to a direction perpendicular to the board plane.

3. The method according to claim 1 or 2 wherein a separating material (3) is applied to said sheet metal train (2) before inserting said filling material between the future sandwich board elements, so that said filling can be withdrawn from said sheet metal train (2) after said hardening there.

4. The method according to claim 3 wherein said separating material is a paper or plastics strip (3).

5. The method according to one of the preceding claims wherein a sheet metal piece (2d, 2e) is removed in said sheet metal train (2) between said future sandwich board elements in the transition region between said future sheet metal cover layer (2) in the board plane and a side sheet metal edge region (2a, 2b) bordering on it in such a way that the corresponding area is connected to a separating cut area (4, 5) later.

6. The method according to claim 5 wherein said removed sheet metal piece (2d, 2e) exhibits a U-like shape whose legs rise up into the sheet metal edge region (2a, 2b) and form a connection to said separating cut (4, 5) later.

7. The method according to one of the preceding claims wherein said strip (2c) is made to fit closely to a shape-defining surface (9) as said sheet metal cover layer strip (2c) is bent after said hardening, and the strip edge (2c) is radially confined during said bending in order to achieve a shape-defined bending behaviour.

8. The method according to one of the preceding claims wherein said further cover layer (1) is also a sheet metal cover layer (1), is fabricated from a continuous sheet metal train (1), and is bent (1a, 1b) along its long side before inserting said filling material.

9. The method according to one of the preceding claims wherein said filling material is a PUR/PIR foam material, mineral fibre material or honeycomb structure material.

10. A plant for fabricating sandwich board elements having a sheet metal cover layer (2), a filling and a further cover layer (1), said plant having:
- a double conveyor system wherein said plant is designed such that said sheet metal cover layer (2) in the condition of a continuous sheet metal train (2) and said further cover layer (1) as well as the filling material inbetween are placed into said double conveyor system,
- a separating device designed for separating cuts (4, 5, 6) between said sandwich board elements through said further cover layer (1) and at least a part of said filling in said double conveyor system, wherein said sheet metal cover layer (2) protrudes beyond at least one of said separating cuts (4, 5),
- a device for removing at least a part of said filling material between said separating cuts (4, 5, 6),
- and a bending device (8 - 11) designed for bending a protruding sheet metal strip (2c) of said sheet metal cover layer (2) for fabricating an end sheet metal edge (2c) covering at least a part of an end face of said sandwich board element.

11. The plant according to claim 10 designed for a method according to one of claims 2 - 9.

## Revendications

1. Procédé de fabrication d'un élément en panneau sandwich, avec une couche de recouvrement en tôle (2), un remplissage et une couche de recouvrement supplémentaire (1), lequel procédé comporte les étapes :
- introduction de la couche de recouvrement en tôle (2) sous la forme d'une barre continue de tôle (2) et de la couche de recouvrement supplémentaire (1) ainsi qu'entre les deux, du matériau de remplissage dans une installation à double bande,
- durcissement dans l'installation à double bande,
- coupes de séparation (4, 5, 6) entre les éléments en panneau sandwich à travers la couche de recouvrement supplémentaire (1) et au moins une partie du remplissage après le durcissement dans l'installation à double bande, la couche de recouvrement en tôle (2) débordant par dessus au moins une coupe de séparation (4, 5),
- enlèvement d'au moins une partie du matériau de remplissage entre les coupes de séparation (4, 5, 6)
- et cintrage d'une bande de tôle débordante (2c) de la couche de recouvrement en tôle (2) pour créer une arête de terminaison en tôle (2c) recouvrant au moins une partie d'une face frontale de l'élément en panneau sandwich.

2. Procédé selon la revendication 1, lors duquel on cintre sur le côté longitudinal la barre continue de tôle (2) avant l'introduction dans l'installation à double bande, de sorte que l'élément en panneau sandwich comporte des arétes profilées (2a, 2b) pour une fermeture géométrique par rapport à une direction perpendiculaire au plan du panneau.

3. Procédé selon la revendication 1 ou 2, lors duquel on applique sur la barre de tôle (2) avant l'introduction du matériau de remplissage entre les futurs éléments en panneau sandwich un matériau de séparation (3), de sorte que le remplissage soit détachable de la barre de tôle (2) à cet endroit, après durcissement.

4. Procédé selon la revendication 3, dans lequel le matériau de séparation est une bande de papier ou de film (3).

5. Procédé selon l'une quelconque des revendications précédentes, lors duquel on retire dans la barre de tôle (2) entre les futurs éléments en panneau sandwich, à la transition entre la future couche de recouvrement en tôle (2) dans le plan du panneau et une zone adjacente d'arête de tôle latérale (2a, 2b) un morceau de tôle (2d, 2e), de sorte que l'aire correspondante soit par la suite adjacente à une aire de coupe de séparation (4, 5).

6. Procédé selon la revendication 5, dans lequel le morceau de tôle (2d, 2e) retiré présente une forme pareille à un U dont les branches saillissent vers le haut dans la zone de l'arête de tôle (2a, 2b) et forment par la suite un raccord sur la coupe de séparation (4, 5).

7. Procédé selon l'une quelconque des revendications précédentes, lors duquel, lors du cintrage de la bande de couche de recouvrement en tôle (2c), après durcissement, on amène la bande (2c) en appui contre une surface (9) définissant une forme et on limite en direction radiale l'arête de bande (2c) lors du mouvement de cintrage, pour obtenir un comportement en flexion de forme définie.

8. Procédé selon l'une quelconque des revendications précédentes, dans lequel la couche de recouvrement supplémentaire (1) est également une couche de recouvrement en tôle (1), est créée à partir d'une barre continue de tôle (1) et est cintrée (1a, 1b) sur le côté longitudinal avant l'introduction du matériau de remplissage.

9. Procédé selon l'une quelconque des revendications précédentes, dans lequel le matériau de remplissage est une matière en mousse PUR/PIR, une matière en fibre minérale ou une matière à structure alvéolée.

10. Installation pour la fabrication d'éléments en panneau sandwich, avec une couche de recouvrement en tôle (2), un remplissage et une couche de recouvrement supplémentaire (1), avec :
une installation à double bande, l'installation étant conçue de sorte que la couche de recouvrement en tôle (2) soit introduite sous la forme d'une barre continue de tôle (2) et que la couche de recouvrement supplémentaire (1) soit introduite, ainsi que le matériau de remplissage entre ces dernières, dans l'installation à double bande,
- un dispositif de séparation, qui est conçu pour des coupes de séparation (4, 5, 6) entre les éléments en panneau sandwich à travers la couche de recouvrement supplémentaire (1) et au moins une partie du remplissage dans l'installation à double bande, la couche de recouvrement en tôle (2) débordant par dessus au moins une coupe de séparation (4, 5),
- un dispositif pour retirer au moins une partie du matériau de remplissage entre les coupes de séparation (4, 5, 6)
- et un dispositif de cintrage (8 à 11), qui est conçu pour cintrer une bande de tôle débordante (2c) de la couche de recouvrement en tôle (2) pour créer une arête de terminaison en tôle (2c) recouvrant au moins une partie d'une face frontale de l'élément en panneau sandwich.

11. Installation selon la revendication 10, qui est conçue pour un procédé selon l'une quelconque des revendications 2 à 9.
